# EUROPEAN PATENT SPECIFICATION

(11) **EP 3 151 628 B1**
(45) Date of publication and mention of the grant of the patent: **10.10.2018**
(21) Application number: 16165624.4
(22) Date of filing: 15.04.2016
(51) Int. Cl.: H04W 84/12

(54) **METHOD, DEVICE AND SYSTEM FOR ACCESSING A WIRELESS NETWORK**
VERFAHREN, VORRICHTUNG UND SYSTEM ZUM ZUGRIFF AUF EIN DRAHTLOSES NETZWERK
PROCÉDÉ, DISPOSITIF ET SYSTÈME POUR ACCÉDER À UN RÉSEAU SANS FIL

(30) Priority: 30.09.2015 CN 201510642554
(43) Date of publication of application: 05.04.2017
(73) Proprietor: Xiaomi Inc., Beijing 100085 (CN)
(72) Inventor: CHEN, Hong, Beijing Beijing 100085 (CN); MENG, Deguo, Beijing Beijing 100085 (CN); HOU, Enxing, Beijing Beijing 100085 (CN)
(74) Representative: Sackin, Robert

(56) References cited:
- US-A1- 2003 169 713

## Description

### FIELD

The present disclosure relates to communication technology field, and more particularly to a method, a device and a system for accessing a wireless network.

### BACKGROUND

In a process of using a smart device, the smart device may be connected with a router by a user, and then a wireless local area network (WLAN) such as a WIFI network provided by the router is used.

When accessing the WIFI network, usually the user may choose the WIFI network and input a password on the smart device manually, or the user may choose the WIFI network and input the password by means of controlling the smart device via other terminals, and then the WIFI network is accessed.

The above WIFI network access process needs complex operations, such that the user experience is affected.

US patent application with publication number US 2003/0169713 discloses a zero-configuration secure mobility networking technique for WLANs, utilizing split link-layer and a web-based authentication. The web-based authentication server employs a Web page for initial authentication and a Java applet for consequent authentications. Once a user is authenticated to the WLAN, the user's mobile host obtains full IP connectivity.

### SUMMARY

In order to solve problems in the related art, the present disclosure provides a method, a device and a system for accessing a wireless network.

Aspects of the invention are defined by the independent claims below to which reference should now be made. Preferred features are defined by the dependent claims.

According to embodiments of a first aspect of the present disclosure, a method for accessing a wireless network is provided. The method includes:
accessing a target router according to first access information, so as to access a part of servers;
sending device verification information to the part of servers;
receiving second access information, in which the second access information is sent by the target router when the device verification information passes verification performed on the part of servers; and
accessing the target router according to the second access information, so as to access all of the servers.

According to an implementation of the first aspect of the present disclosure, receiving second access information includes:
receiving the second access information sent by the target router, in which the second access information is sent by the target router according to an instruction from the part of servers.

According to another implementation of the first aspect of the present disclosure, receiving second access information includes:
receiving the second access information sent by the part of servers.

In the present embodiment, the second access information may be sent by the servers, or may be sent by the router, such that diversified demands are satisfied.

According to another implementation of the first aspect of the present disclosure, the device verification information includes a device identification and a verification key.

According to another implementation of the first aspect of the present disclosure, the first access information includes an identification of a first wireless network, or the first access information includes the identification and a password of the first wireless network, in which, the first wireless network supports accessing the part of servers; and
the second access information includes an identification and a password of a second wireless network, in which, the second wireless network supports accessing all of the servers.

According to embodiments of a second aspect of the present disclosure, a method for accessing a wireless network is provided. The method includes:
establishing a first connection with a device to access the wireless network according to first access information, so as to support the device in accessing a part of servers;
receiving device verification information sent by the device;
sending the device verification information to the part of servers; and
after the device verification information passes verification performed on the part of servers, establishing a second connection with the device according to second access information, so as to support the device in accessing all of the servers.

According to an implementation of the second aspect of the present disclosure, establishing a second connection with the device according to second access information includes:
receiving an instruction sent by the part of servers, in which the instruction is used to indicate sending the second access information to the device; and
sending the second access information to the device.

According to another implementation of the second aspect of the present disclosure, establishing a second connection with the device according to second access information includes:
receiving the second access information sent by the part of servers; and
sending the second access information to the device.

According to another implementation of the second aspect of the present disclosure, the device verification information includes a device identification and a verification key.

According to another implementation of the second aspect of the present disclosure, the first access information includes an identification of a first wireless network, or the first access information includes the identification and a password of the first wireless network, in which, the first wireless network supports accessing the part of servers; and
the second access information includes an identification and a password of a second wireless network, in which, the second wireless network supports accessing all of the servers.

According to embodiments of a third aspect of the present disclosure, a method for accessing a wireless network is provided. The method includes:
receiving device verification information sent by a device to access the wireless network via a target router;
performing a verification on the device according to the device verification information; and
sending second access information to the device via the target router when the verification is successful, such that the device accesses the target router according to the second access information, and thus accesses all of the servers.

According to an implementation of the third aspect of the present disclosure, sending second access information to the device via the target router includes:
sending an instruction to the target router so as to instruct the target router to send the second access information to the device.

According to another implementation of the third aspect of the present disclosure, sending second access information to the device via the target router includes:
sending the second access information to the target router, such that the target router sends the second access information to the device.

According to another implementation of the third aspect of the present disclosure, the device verification information includes a device identification and a verification key.

According to another implementation of the third aspect of the present disclosure, the second access information includes an identification and a password of a second wireless network, in which, the second wireless network supports accessing all of the servers.

According to embodiments of a fourth aspect of the present disclosure, a device for accessing a wireless network is provided. The device includes:
an accessing module, configured to access a target router according to first access information, so as to access a part of servers;
a sending module, configured to send device verification information to the part of servers; and
a receiving module, configured to receive second access information, in which the second access information is sent by the target router when the device verification information passes verification performed on the part of servers;
in which, the accessing module is further configured to access the target router according to the second access information, so as to access all of the servers.

According to an implementation of the fourth aspect of the present disclosure, the receiving module is configured to:
receive the second access information sent by the target router, in which the second access information is sent by the target router according to an instruction from the part of servers.

According to another implementation of the fourth aspect of the present disclosure, the receiving module is configured to:
receive the second access information sent by the part of servers.

According to another implementation of the fourth aspect of the present disclosure, the device verification information includes a device identification and a verification key.

According to another implementation of the fourth aspect of the present disclosure, the first access information includes an identification of a first wireless network, or the first access information includes the identification and a password of the first wireless network, in which, the first wireless network supports accessing the part of servers; and
the second access information includes an identification and a password of a second wireless network, in which, the second wireless network supports accessing all of the servers.

According to embodiments of a fifth aspect of the present disclosure, a device for accessing a wireless network is provided. The device includes:
a connecting module, configured to establish a first connection with a device to access the wireless network according to first access information, so as to support the device to access the wireless network in accessing a part of servers;
a receiving module, configured to receive device verification information sent by the device to access the wireless network; and
a sending module, configured to send the device verification information to the part of servers;
in which, the connecting module is further configured to establish a second connection with the device to access the wireless network according to second access information after the device verification information passes verification performed on the part of servers, so as to support the device to access the wireless network in accessing all of the servers.

According to an implementation of the fifth aspect of the present disclosure, the connecting module includes:
a receiving sub-module, configured to receive an instruction sent by the part of servers, in which the instruction is used to indicate sending the second access information to the device to access the wireless network; and
a sending sub-module, configured to send the second access information to the device to access the wireless network.

According to another implementation of the fifth aspect of the present disclosure, the connecting module includes:
a receiving sub-module, configured to receive the second access information sent by the part of servers; and
a sending sub-module, configured to send the second access information to the device to access the wireless network.

According to another implementation of the fifth aspect of the present disclosure, the device verification information includes a device identification and a verification key.

According to another implementation of the fifth aspect of the present disclosure, the first access information includes an identification of a first wireless network, or the first access information includes the identification and a password of the first wireless network, in which, the first wireless network supports accessing the part of servers; and
the second access information includes an identification and a password of a second wireless network, in which, the second wireless network supports accessing all of the servers.

According to embodiments of a sixth aspect of the present disclosure, a device for accessing a wireless network is provided. The device includes:
a receiving module, configured to receive device verification information sent by a device to access the wireless network via a target router;
a verifying module, configured to perform a verification on the device to access the wireless network according to the device verification information; and
a sending module, configured to send second access information to the device to access the wireless network via the target router when the verification is successful, such that the device to access the wireless network accesses the target router according to the second access information, and thus accesses all of the servers.

According to an implementation of the sixth aspect of the present disclosure, the sending module is configured to:
send an instruction to the target router so as to instruct the target router to send the second access information to the device to access the wireless network.

According to another implementation of the sixth aspect of the present disclosure, the sending module is configured to:
send the second access information to the target router, such that the target router sends the second access information to the device to access the wireless network.

According to another implementation of the sixth aspect of the present disclosure, the device verification information includes a device identification and a verification key.

According to another implementation of the sixth aspect of the present disclosure, the second access information includes an identification and a password of a second wireless network, in which, the second wireless network supports accessing all of the servers.

According to embodiments of a seventh aspect of the present disclosure, a device for accessing a wireless network is provided. The device includes:
a processor; and
a memory, configured to store instructions executable by the processor;
in which, the processor is configured to:
   access a target router according to first access information, so as to access a part of servers;
   send device verification information to the part of servers;
   receive second access information, in which the second access information is sent by the target router when the device verification information passes verification performed on the part of servers; and
   access the target router according to the second access information, so as to access all of the servers.

According to embodiments of an eighth aspect of the present disclosure, a device for accessing a wireless network is provided. The device includes:
a processor; and
a memory, configured to store instructions executable by the processor;
in which, the processor is configured to:
   establish a connection with a device to access the wireless network according to first access information, so as to support the device to access the wireless network accessing a part of servers;
   receive device verification information sent by the device to access the wireless network;
   send the device verification information to the part of servers; and
   after the device verification information passes verification performed on the part of servers, establish a connection with the device to access the wireless network according to second access information, so as to support the device to access the wireless network accessing all of the servers.

According to embodiments of a ninth aspect of the present disclosure, a device for accessing a wireless network is provided. The device includes:
a processor; and
a memory, configured to store instructions executable by the processor;
in which, the processor is configured to:
   receive device verification information sent by a device to access the wireless network via a target router;
   perform a verification on the device to access the wireless network according to the device verification information; and
   send second access information to the device to access the wireless network via the target router when the verification is successful, such that the device to access the wireless network accesses the target router according to the second access information, and thus accesses all of the servers.

According to embodiments of a tenth aspect of the present disclosure, a system for accessing a wireless network is provided. The system includes a terminal device, a router and a plurality of servers, in which
the terminal device is configured to access the router according to first access information, so as to access a part of servers; to send device verification information to the part of servers; to receive second access information; and to access the target router according to the second access information, so as to access all of the servers;
the router is configured to establish a first connection with the terminal device according to the first access information; to receive the device verification information sent by the terminal device; to send the device verification information to the part of servers; and to establish a second connection with the terminal device according to the second access information after the device verification information passes verification performed on the part of servers; and
the server is configured to receive the device verification information sent by the terminal device via the router; to perform a verification on the terminal device according to the device verification information; and to send the second access information to the terminal device via the router when the verification is successful.

The technical solutions provided in the present disclosure may include the following beneficial effects.

The smart device first sends the device verification information to the part of servers for performing the verification via the wireless network only supporting accessing the part of servers, and then obtains the second access information after the verification is successful, such that the target router is accessed according to the second access information, all of the servers are accessed and data transmission is performed. When the smart device accesses the target router and accesses all the servers, the user does not need to choose the wireless network and input a password manually, the access process is convenient, and the user experience is improved.

It should be understood that, the above general description and following detail description are exemplary and explanatory, and shall not be construed to limit the present disclosure.

### BRIEF DESCRIPTION OF THE DRAWINGS

These and other aspects and advantages of embodiments of the present disclosure will become apparent and more readily appreciated from the following descriptions made with reference to the drawings.
Fig. 1 is a schematic diagram of an application scene according to an example embodiment of the present disclosure.
Fig. 2 is a flow chart of a method for accessing a wireless network according to an example embodiment of the present disclosure.
Fig. 3 is a flow chart of a method for accessing a wireless network according to an example embodiment of the present disclosure.
Fig. 4 is a flow chart of a method for accessing a wireless network according to an example embodiment of the present disclosure.
Fig. 5 is a flow chart of a method for accessing a wireless network according to an example embodiment of the present disclosure.
Fig. 6 is a flow chart of a method for accessing a wireless network according to an example embodiment of the present disclosure.
Fig. 7 is a flow chart of a method for accessing a wireless network according to an example embodiment of the present disclosure.
Fig. 8 is a flow chart of a method for accessing a wireless network according to an example embodiment of the present disclosure.
Fig. 9 is a block diagram of a device for accessing a wireless network according to an example embodiment of the present disclosure.
Fig. 10 is a block diagram of a device for accessing a wireless network according to another example embodiment of the fourth aspect of the present disclosure.
Fig. 11 is a block diagram of a device for accessing a wireless network according to an example embodiment of the present disclosure.
Fig. 12 is a block diagram of a device for accessing a wireless network according to an example embodiment of the present disclosure.
Fig. 13 is a block diagram of a device for accessing a wireless network according to an example embodiment of the present disclosure.
Fig. 14 is a block diagram of a device for accessing a wireless network according to an example embodiment of the present disclosure.
Fig. 15 is a schematic diagram of a device for accessing a wireless network according to an example embodiment of the present disclosure.
Fig. 16 is a schematic diagram of a device for accessing a wireless network according to an example embodiment of the present disclosure.
Fig. 17 is a schematic diagram of a device for accessing a wireless network according to an example embodiment of the present disclosure.
Fig. 18 is a block diagram of a system for accessing a wireless network according to an example embodiment of the present disclosure.

### DETAILED DESCRIPTION

Exemplary embodiments will be described in detail herein, and examples thereof are illustrated in accompanying drawings. Throughout figures referred by the following description, the same reference number in different figures indicates the same or similar elements unless otherwise stated. Implementation methods described in the following exemplary embodiments do not represent all the implementation methods consistent with the present disclosure. Instead, they are only examples of the device and method consistent with some aspects of the present disclosure detailed in the appended claims.

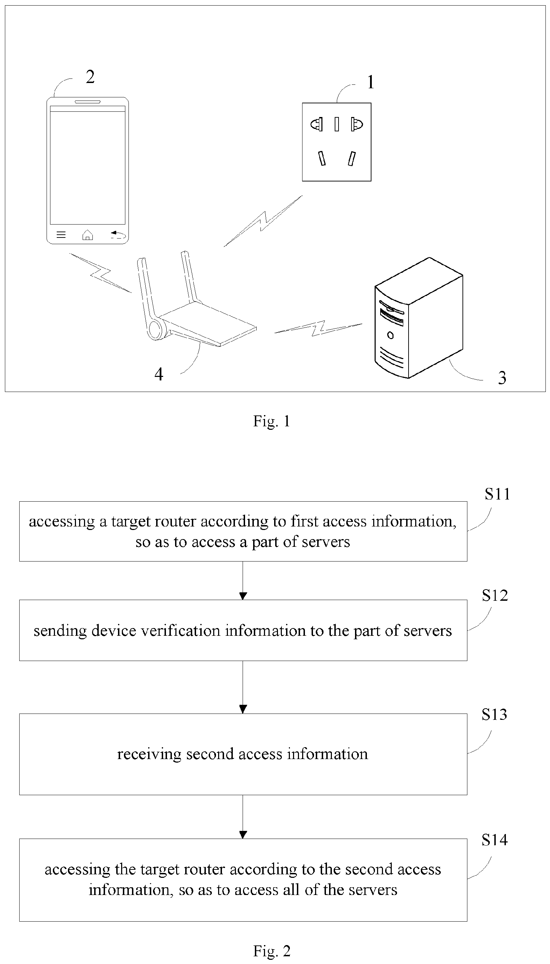

In order to describe embodiments conveniently, an application scene in embodiments of the present disclosure is introduced at first. Referring to Fig. 1, the application scene includes a smart device 1, a mobile terminal 2, a server 3 and a router 4. The mobile terminal 2 is connected with the router 3, the mobile terminal 2 may send a start instruction to the router 4, so as to turn on a first wireless network in the router 4, in which the first wireless network does not have a password (or the password is a preset password), and the first wireless network may only communicate with the server 3. After the first wireless network is turned on, if it is scanned by the smart device 1, the smart device 1 accesses the first wireless network, and then performs a verification with the server 3. When the smart device 1 passed the verification, the router 4 sends an identification and a password of a second wireless network to the smart device 1, and the smart device 1 may access the second wireless network after receiving the identification and the password of the second wireless network, such that uploading data and other network functions are realized.

The smart device 1 includes but is not limited to a smart plug, a smart camera, a smart watch, a smart bracelet, a smart remote controller, a smart phone etc.; the mobile terminal 2 includes but is not limited to a smart phone or a tablet computer; and the router is a smart router, e.g. a XiaoMi router.

It should be noted that, the above-described types and number of devices are just examples, which shall not be construed to limit the present disclosure.

Fig. 2 is a flow chart of a method for accessing a wireless network according to an example embodiment of the present disclosure. The method is applied to the smart device described above, and as shown in Fig. 2, the method includes steps as follows.

In step S11, a target router is accessed according to first access information, so as to access a part of servers or less than all of a group of servers.

The part of servers include servers used for performing a verification on the smart device, for example, the smart device may be a XiaoMi smart plug, a XiaoMi bracelet, and the part of servers include a XiaoMi server.

In step S12, device verification information is sent to the part of servers or the less than all of the group of servers.

The device verification information is used for verifying the smart device by the part of servers or less than all of the group of servers.

In step S13, second access information is received, in which the second access information is sent by the target router when the device verification information passes verification performed on the part of servers or the less than all of the group of servers.

In step S14, the target router is accessed according to the second access information, so as to access all of the servers or all of the group of servers.

After the target router is accessed according to the second access information, accessing all of the servers in the whole internet may be performed.

The target router is the router described above, e.g. a XiaoMi router.

In the present disclosure, the smart device first sends the device verification information to the part or some of the servers for performing the verification via the wireless network only supporting accessing the part or some of the servers, and then obtains the second access information after the verification is successful, such that the target router is accessed according to the second access information, all of the servers are accessed and data transmission is perform. When the smart device accesses the target router and accesses all the servers, the user does not need to choose the wireless network and input a password manually, the access process is convenient, and the user experience is improved.

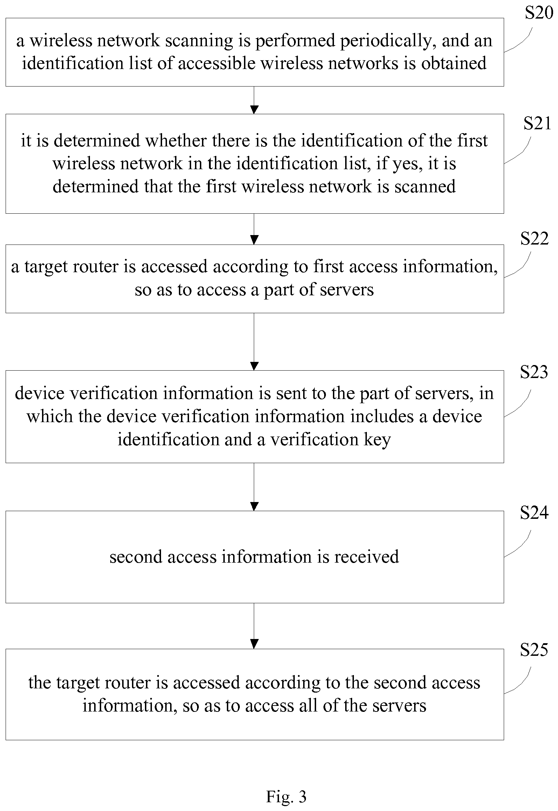

Fig. 3 is a flow chart of a method for accessing a wireless network according to an example embodiment of the present disclosure. The method is applied to the smart device described above. As shown in Fig. 3, the method includes steps as follows.

In step S20, a wireless network scanning is performed periodically, and an identification list of accessible wireless networks is obtained.

For example, the smart device receives beacon frames sent by the routers (including the target router) periodically, and determines the identification list of accessible wireless networks according to identifications of the wireless networks in the beacon frames.

The identification of the wireless network is a Service Set Identifier (SSID) of the wireless network, and the identification list of the accessible wireless networks is formed of multiple SSIDs of the wireless networks.

In step S21, it is determined whether there is the identification of the first wireless network in the identification list, if yes, it is determined that the first wireless network is scanned. The first wireless network is provided by the target router for supporting the smart device in accessing the part or some of the servers, and the first wireless network is an unencrypted wireless network or a wireless network with a set password.

If the identification of the first wireless network does not exist in the identification list, step S20 and step S21 are executed until the first wireless network is scanned.

In step S22, a target router is accessed according to first access information, so as to access a part or some of the servers.

The first access information includes an identification of a first wireless network, or the first access information includes the identification and a password of the first wireless network, in which, the first wireless network supports accessing the part or some of the servers. The first access information may be pre-stored in the smart device.

The part or some of the servers include servers used for performing a verification on the smart device, for example, the smart device may be a XiaoMi smart plug, a XiaoMi bracelet, and the part of servers include a XiaoMi server.

Accessing a target router according to first access information includes:
sending a verification request to the target router, in which the verification request includes the identification of the first wireless network, or the identification and the password of the first wireless network; and
when a verification response returned by the target router is received, associating the smart device with the first wireless network, so as to access to the first wireless network.

Associating the smart device with the first wireless network may include: sending by the smart device an association request to the target router; and receiving by the smart device an association confirmation returned by the target router. After the association is completed, the smart device may perform a data interaction with the target router.

In step S23, device verification information is sent to the part of servers, in which the device verification information includes a device identification and a verification key.

The verification key is generated by the server, and programmed into the smart device when producing the smart device. The server will store a correspondence relationship between verification keys and device identifications. The server performs the verification on the smart device according to the stored correspondence relationship between verification keys and device identifications, i.e., if the device identification and the verification key sent by the smart device are stored in the server and are matched with each other, the verification is successful.

In step S24, second access information is received, in which the second access information is sent by the target router when the device verification information passes verification performed on the part or some of the servers.

In an implementation of the present embodiment, receiving second access information includes:
receiving the second access information sent by the target router, in which the second access information is sent by the target router according to an instruction from the part of or the some of the servers. Before sending the second access information to the smart device, the target router receives the instruction from the part of servers, in which the instruction is used to indicate the target router that the smart device passes the verification, and the instruction includes the device identification of the smart device.

In another implementation of the present embodiment, receiving second access information includes:
receiving the second access information sent by the part of servers, in which the second access information sent by the part of servers may be pre-uploaded to the part or the some of the servers by the target router.

If the verification is not successful, the smart device will not receive the second access information.

The second access information includes an identification and a password of a second wireless network, in which, the second wireless network supports accessing all of the servers and the second wireless network is provided by the target router.

In step S25, the target router is accessed according to the second access information, so as to support accessing all of the servers.

After the target router is accessed according to the second access information, accessing all of the servers in the whole internet may be performed. In the access process, the user does not need to choose the wireless network and input a password, such that the wireless network is accessed without manual work, which is especially suitable for a smart device (such as a smart bracelet or a smart plug) lacking of an effective input device or display device, the access is realized without performing a control via other terminal devices, and the access process is convenient.

The access process is identical with step S22, which shall not be elaborated herein.

In the present disclosure, the smart device first sends the device verification information to the part or the some of the servers for performing the verification via the wireless network only supporting accessing the part or the some of the servers, and then obtains the second access information after the verification is successful, such that the target router is accessed according to the second access information, all of the servers are accessed and data transmission is performed. When the smart device accesses the target router and accesses all the servers, the user does not need to choose the wireless network and input a password manually, the access process is convenient, and the user experience is improved.

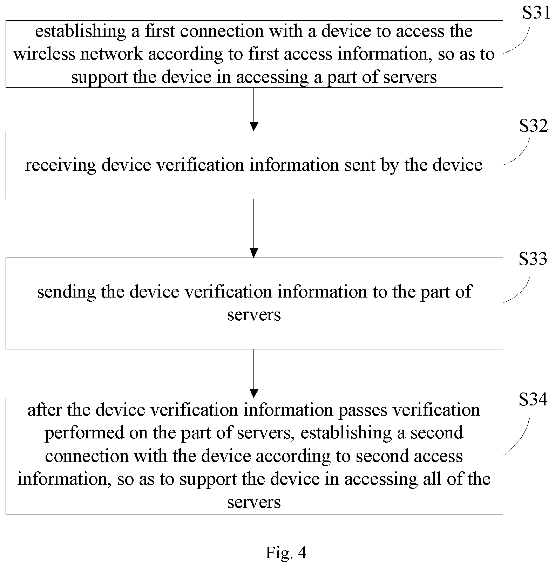

Fig. 4 is a flow chart of a method for accessing a wireless network according to an example embodiment of the present disclosure. The method is applied to the router described above. As shown in Fig. 4, the method includes steps as follows.

In step S31, a first connection is established with a device to access the wireless network according to first access information, so as to support the device in accessing a part or some (less than all) of a group or plurality of servers.

The device to access the wireless network may be the smart device described above. The part of servers include servers used for performing a verification on the smart device, for example, the smart device may be a XiaoMi smart plug, a XiaoMi bracelet, and the part of servers include a XiaoMi server.

In step S32, device verification information sent by the device is received.

In step S33, the device verification information is sent to the part or the some of the servers, such that the part or some of the servers performs verification on the device.

In step S34, after the device verification information passes verification performed on the part or the some of the servers, a second connection is established with the device according to second access information, so as to support the device in accessing all of the servers.

After the device is accessed to the target router according to the second access information, accessing all of the servers in the whole internet may be performed.

In the present embodiments, the target router first establishes the connection with the device to access the wireless network via the wireless network only supporting accessing the part or the some of the servers, and then sends the device verification information of the device to the part or the some of the servers for the verification, and establishes the connection with the device according to the second access information after the verification is successful, such that the device may access all of the servers and perform data transmission. When the device accesses the target router and accesses all the servers, the user does not need to choose the wireless network and input a password manually, the access process is convenient, and the user experience is improved.

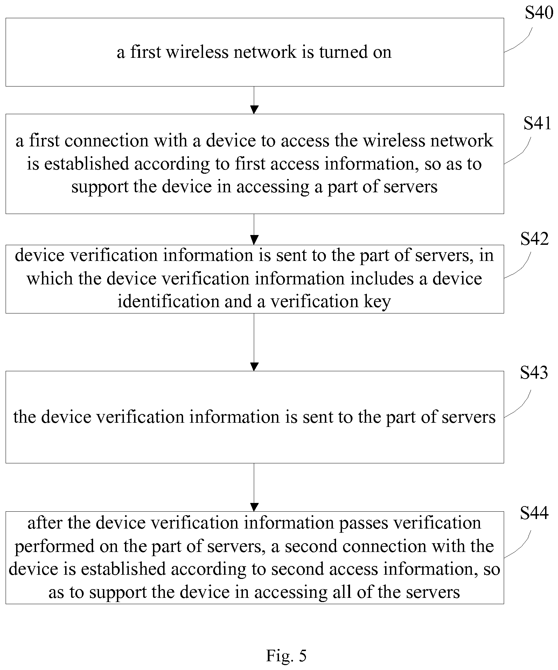

Fig. 5 is a flow chart of a method for accessing a wireless network according to an example embodiment of the present disclosure. The method is applied to the router (i.e. the target router) described above. As shown in Fig. 5, the method includes steps as follows.

In step S40, a first wireless network is turned on, in which the first wireless network supports accessing a part or some (less than all) of a group of servers, and the first wireless network is an unencrypted wireless network or a wireless network with a set password.

In an implementation of the present embodiment, the router receives a start instruction sent by a mobile terminal, in which the start instruction is used to turn on the first wireless network; and turns on the first wireless network according to the start instruction.

In another implementation of the present embodiment, the first wireless network of the router may also be turned on while starting, such that the mobile terminal does not need to send the start instruction.

In the present embodiment, the first wireless network is pre-configured, including a password (which is null or is a set password) and a router filtering (e.g. only data with the part of servers as a destination address is allowed to pass).

In step S41, a connection is established with a device to access the wireless network according to first access information, so as to support the device in accessing a part or some of the servers.

The device may be the smart device described above. The part or some of the servers include servers used for performing a verification on the smart device, for example, the smart device may be a XiaoMi smart plug, a XiaoMi bracelet, and the part of servers include a XiaoMi server.

The first access information includes an identification of a first wireless network, or the first access information includes the identification and a password of the first wireless network, in which, the first wireless network supports accessing the part of servers.

Step S41 may include:
receiving a verification request sent by the device, in which the verification request includes the identification of the first wireless network, or the identification and the password of the first wireless network;
if the first wireless network has no password, returning a verification response directly, and if the first wireless network has the password, returning the verification response after a verification on the password is performed; and
after the verification response is returned to the device, associating the device with the first wireless network, such that the device is connected to the first wireless network.

In step S42, device verification information sent by the device is received, in which the device verification information includes a device identification and a verification key.

The device verification information for verifying the device to access the wireless network by the part of servers.

In step S43, the device verification information is sent to the part or some of the servers.

In step S44, after the device verification information passes verification performed on the part or some of the servers, a connection is established with the device according to second access information, such that the device is connected to the second wireless network and may access all the servers, in which the second access information includes the identification and the password of the second wireless network, and the second wireless network supports accessing all the servers.

In an implementation of the embodiments of the present disclosure, establishing a connection with the device according to second access information includes:
receiving instructions sent by the part of servers, in which the instructions are used to indicate sending the second access information to the device; and
sending the second access information to the device.

In another implementation of the embodiments of the present disclosure, establishing a connection with the device according to second access information includes:
receiving the second access information sent by the part or the some of the servers; and
sending the second access information to the device.

After sending the second access information to the device, the router receives the verification request sent by the device, in which the verification request includes the identification and the password of the second wireless network; if the password of the second wireless network passes the verification, the router returns the verification response; the router receives the association request sent by the device; and the router returns the association confirmation to the device. After the association is completed, the device to access the wireless network may perform a data interaction with the target router.

In the present embodiments, the router first establishes the connection with the device via the wireless network only supporting accessing the part or the some of the servers, and then sends the device verification information of the device to the part or the some of the servers for the verification, and after the verification is successful, establishes the connection with the device according to the second access information, such that the device may access all of the servers and perform data transmission. When the device accesses the router and accesses all the servers, the user does not need to choose the wireless network and input a password manually, the access process is convenient, and the user experience is improved.

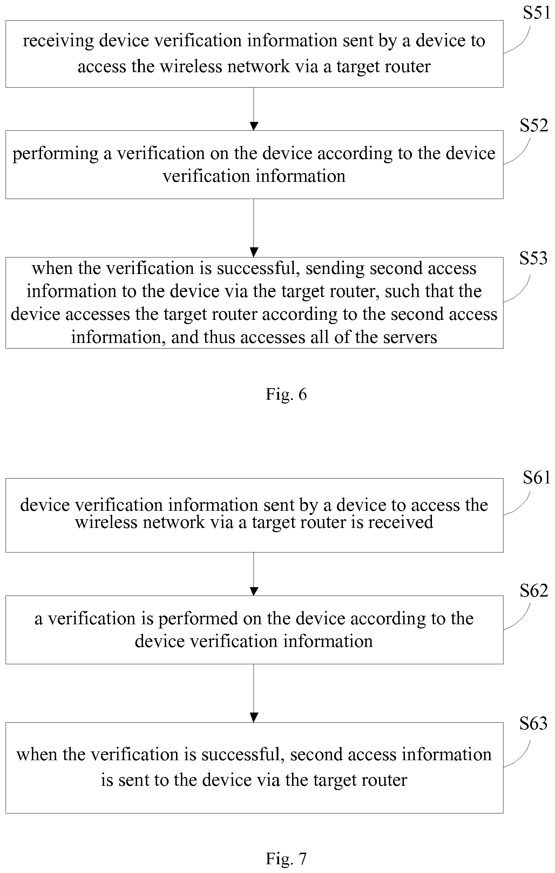

Fig. 6 is a flow chart of a method for accessing a wireless network according to an example embodiment of the present disclosure. The method is applied to the server described above. As shown in Fig. 6, the method includes steps as follows.

In step S51, device verification information sent by a device to access the wireless network via a target router is received.

The device to access the wireless network may be the smart device described above, for example, a Xiaomi smart plug and a Xiaomi bracelet. The target router may be the router described above, for example, a Xiaomi router.

In step S52, a verification is performed on the device according to the device verification information.

In step S53, when the verification is successful, second access information is sent to the device via the target router, such that the device accesses the target router according to the second access information, and thus accesses all of the servers.

In the present embodiment, the part or some (less than all) of the group of servers perform the verification on the device according to the device verification information, and sends the second access information to the device via the target router when the device passes the verification, such that the device accesses the target router according to the second access information, and thus accesses all of the servers and performs data transmission. When the device accesses the second wireless network, the user does not need to choose the wireless network and input a password manually, the access process is convenient, and the user experience is improved.

Fig. 7 is a flow chart of a method for accessing a wireless network according to an example embodiment of the present disclosure. The method is applied to a server described above. As shown in Fig. 7, the method includes steps as follows.

In step S61, device verification information sent by a device to access the wireless network via a target router is received, the device verification information includes a device identification and a verification key.

The device to access the wireless network may be the smart device described above, for example, a Xiaomi smart plug and a Xiaomi bracelet. The target router may be the router described above, for example, a Xiaomi router. The server receives the device verification information sent by the device via the first wireless network, in which the first wireless network is configured to support the device in accessing a part of servers.

In step S62, a verification is performed on the device according to the device verification information.

The verification key is generated by the server, and programmed into the device to access the wireless network when producing the device. The server will store a correspondence relationship between respective verification keys and device identifications. The server performs the verification on the device identification and the verification key, including: searching for the device identification and the verification key sent by the device in the server, determining that the verification is successful if the device identification and the verification key sent by the device are stored in the server and matched with each other; otherwise, determining that the verification is not successful.

In step S63, when the verification is successful, second access information is sent to the device via the target router, such that the device accesses the target router according to the second access information, and thus accesses all of the servers. The second access information includes an identification and a password of a second wireless network, in which, the second wireless network supports accessing all of the servers.

In an implementation of the present embodiment, sending second access information to the device via the target router includes:
sending an instruction to the target router so as to instruct the target router to send the second access information to the device.

In another implementation of the present embodiment, sending second access information to the device via the target router includes:
sending the second access information to the target router, such that the target router sends the second access information to the device.

In the present embodiment, server performs the verification on the device to access the wireless network according to the device verification information, and sends the second access information to the device via the target router when the device passes the verification, such that the device is accessed to the target router according to the second access information, and thus accesses all of the servers and performs data transmission. When the device accesses the second wireless network, the user does not need to choose the wireless network and input a password manually, the access process is convenient, and the user experience is improved.

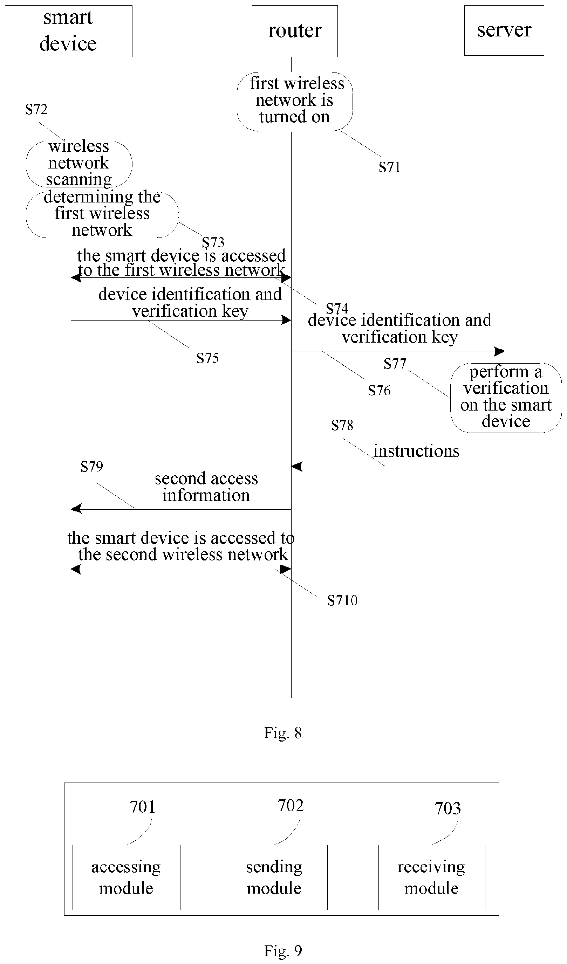

Fig. 8 is a flow chart of a method for accessing a wireless network according to an example embodiment of the present disclosure. As shown in Fig. 8, the method includes steps as follows.

In step S71, the router (i.e. the target router above) turns on a first wireless network, in which the first wireless network is used for supporting a smart device (i.e. the device to access the wireless network) in accessing a part or some of the servers, and the first wireless network is an unencrypted wireless network or a wireless network with a set password.

In step S72, the smart device performs a wireless network scanning periodically, and obtains an identification list of accessible wireless networks.

In step S73, the smart device determines whether there is the identification of the first wireless network in the identification list, and if yes, determines that the first wireless network is scanned.

In step S74, the smart device is accessed to the first wireless network.

In step S75, the smart device sends a device identification and a verification key of the smart device to the router via the first wireless network.

In step S76, the router sends the device identification and the verification key of the smart device to the part or some of the servers.

In step S77, the part of servers perform a verification on the device identification and the verification key, so as to perform a verification on the smart device.

In step S78, when the verification is successful, the part of servers send instructions to the router, in which the instructions are used to instruct the router to send second access information to the smart device, and the instructions include the device identification of the smart device.

If the verification is not successful, the part or some of the servers may send verification failure information to the router (not shown in Fig.7), so as to inform the router that the smart device is an illegal user, and the smart device is not allowed to be accessed to a second wireless network.

In step S79, the router sends the second access information to the smart device, in which the second access information includes an identification and a password of a second wireless network.

In step S710, the smart device is accessed to the second wireless network using the password of the second wireless network.

Concerning the detailed implementation of the above steps, reference may be made to the embodiments described above, which shall not be elaborated herein.

In the present disclosure, the smart device first sends the device verification information to the part or the some of the servers for performing the verification via the wireless network only supporting accessing the part or some of the servers, and then obtains the second access information after the verification is successful, such that the target router is accessed according to the second access information, all of the servers are accessed and data transmission is performed. When the smart device accesses the target router and accesses all the servers, the user does not need to choose the wireless network and input a password manually, the access process is convenient, and the user experience is improved.

Fig. 9 is a block diagram of a device for accessing a wireless network according to an example embodiment of the present disclosure, and the device may be the smart device described above. As shown in Fig. 9, the device includes an accessing module 701, a sending module 702 and a receiving module 703.

The accessing module 701 is configured to access a target router according to first access information, so as to access a part or some of the servers.

The sending module 702 is configured to send device verification information to the part or the some of the servers.

The receiving module 703 is configured to receive second access information, in which the second access information is sent by the target router when the device verification information passes verification performed on the part or the some of the servers.

The accessing module 701 is further configured to access the target router according to the second access information, so as to access all of the servers.

In the present disclosure, the smart device first sends the device verification information to the part or the some of the servers for performing the verification via the wireless network only supporting accessing the part or the some of the servers, and then obtains the second access information after the verification is successful, such that the target router is accessed according to the second access information, all of the servers are accessed and data transmission is performed. When the smart device accesses the target router and accesses all the servers, the user does not need to choose the wireless network and input a password manually, the access process is convenient, and the user experience is improved.

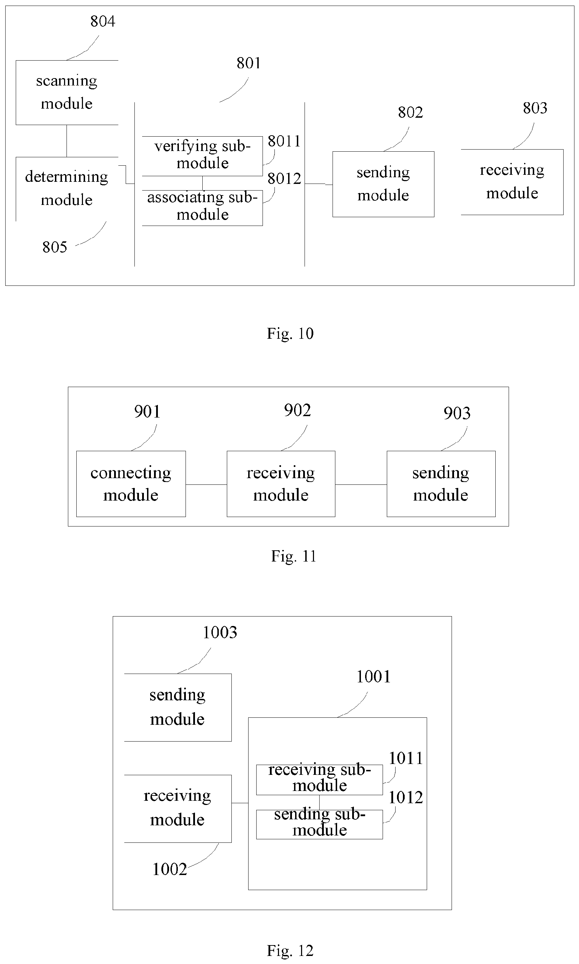

Fig. 10 is a block diagram of a device for accessing a wireless network according to an example embodiment of the present disclosure, and the device may be the smart device described above. As shown in Fig. 10, the device includes modules an accessing module 801, a sending module 802 and a receiving module 803.

The accessing module 801 is configured to access a target router according to first access information, so as to access a part or the some of the servers, in which the first access information includes an identification of a first wireless network, or the first access information includes the identification and a password of the first wireless network, and the first wireless network supports accessing the part of servers.

The first access information may be pre-stored in the device or local to the device.

The sending module 802 is configured to send device verification information to the part or some of the servers, in which the device verification information includes a device identification and a verification key.

The verification key is generated by a server, and programmed into the smart device when producing the smart device. The server will store a correspondence relationship between respective verification keys and device identifications. The server performs the verification on the smart device according to the stored correspondence relationship between respective verification keys and device identifications, i.e., if the device identification and the verification key sent by the smart device are stored in the server and are matched with each other, the verification is successful.

The receiving module 803 is configured to receive second access information, in which the second access information is sent by the target router when the device verification information passes verification performed on the part or the some of the servers. The second access information includes an identification and a keyword of a second wireless network, and the second wireless network supports accessing all the servers.

The accessing module 801 is further configured to access the target router according to the second access information, so as to access all of the servers.

The accessing module 801 includes:
a verifying sub-module 8011, configured to send a verification request to the target router, in which the verification request includes the identification of the first wireless network or the identification and the password of the first wireless network, and the first wireless network is provided by the target router; and
an associating sub-module 8012, configured to associate the smart device with the first wireless network, so as to access to the first wireless network when a verification response returned by the target router is received.

The associating sub-module 8012 is specifically configured to send an association request to the target router; and to receive an association confirmation returned by the target router. After the association is completed, the smart device may perform a data interaction with the target router.

In an implementation of the present embodiment, the receiving module 803 is configured to:
receive the second access information sent by the target router, in which the second access information is sent by the target router according to instructions from the part or the some of the servers. Before sending the second access information to the smart device, the target router receives the instructions from the part or the some of the servers, in which the instructions are used to indicate the target router that the smart device passes the verification, and the instructions include the device identification of the smart device.

In another implementation of the present embodiment, the receiving module 803 is configured to:
receive the second access information sent by the part or the some of the servers, in which the second access information sent by the part or the some of the servers may be pre-uploaded to the part or the some of the servers by the target router.

The device may further include a scanning module 804 and a determining module 805.

The scanning module 804 is configured to perform a wireless network scanning periodically, and to obtain an identification list of accessible wireless networks.

For example, the scanning module 804 receives beacon frames sent by a router periodically, and determines the identification list of the accessible wireless networks according to identifications of the wireless networks in the beacon frames.

The identification of the wireless network is a Service Set Identifier (SSID) of the wireless network, and the identification list of the accessible wireless networks is formed of multiple SSIDs of the wireless networks.

In the present embodiment, the identification of the first wireless network may be pre-stored in the smart device.

The determining module 805 is configured to determine whether the identification of the first wireless network exists in the identification list, to determine that the first wireless network is scanned if the identification of the first wireless network exists in the identification list.

If the identification of the first wireless network does not exist in the identification list, the wireless network scanning is performed repeatedly until the first wireless network is scanned.

In the present embodiments, the smart device first sends the device verification information to the part or the some of the servers for performing the verification via the wireless network only supporting accessing the part or the some of the servers, and then obtains the second access information after the verification is successful, such that the target router is accessed according to the second access information, all of the servers are accessed and data transmission is performed. When the smart device accesses the target router and accesses all the servers, the user does not need to choose the wireless network and input a password manually, the access process is convenient, and the user experience is improved.

Fig. 11 is a block diagram of a device for accessing a wireless network according to an example embodiment of the present disclosure, and the device may be the router described above. As shown in Fig. 11, the router includes a connecting module 901, a receiving module 902 and a sending module 903.

The connecting module 901 is configured to establish a first connection with a device to access the wireless network according to first access information, so as to support the device to access the wireless network in accessing a part of servers.

The receiving module 902 is configured to receive device verification information sent by the device to access the wireless network.

The sending module 903 is configured to send the device verification information received by the receiving module 902 to the part or the some of the servers.

The connecting module 901 is further configured to establish a second connection with the device to access the wireless network according to second access information after the device verification information passes verification performed on the part or the some of the servers, so as to support the device to access the wireless network in accessing all of the servers.

In the present embodiments, the router first establishes the connection with the device to access the wireless network via the wireless network only supporting accessing the part of servers, and then sends the device verification information of the device to access the wireless network to the part or the some of the servers for the verification, and after the verification is successful, establishes the connection with the device to access the wireless network according to the second access information, such that the device to access the wireless network may access all of the servers and perform data transmission. When the device to access the wireless network connects with the router and accesses all the servers, the user does not need to choose the wireless network and input a password manually, the access process is convenient, and the user experience is improved.

Fig. 12 is a block diagram of a device for accessing a wireless network according to an example embodiment of the present disclosure, and the device may be the router described above. As shown in Fig. 12, the router includes modules as follows.

The connecting module 1001 is configured to establish a first connection with a device to access the wireless network according to first access information, so as to support the device to access the wireless network in accessing a part or some (less than all) of a group of servers.

The first access information includes an identification of a first wireless network, or the first access information includes the identification and a password of the first wireless network, in which, the first wireless network supports accessing the part or the some of the servers.

The receiving module 1002 is configured to receive device verification information sent by the device to access the wireless network, in which the device verification information includes a device identification and a verification key.

The sending module 1003 is configured to send the device verification information received by the receiving module 1002 to the part or the some of the servers.

The connecting module 1001 is further configured to establish a second connection with the device to access the wireless network according to second access information after the device verification information passes verification performed on the part or the some of the servers, so as to support the device to access the wireless network in accessing all of the servers.

The second access information includes an identification and a password of a second wireless network, in which, the second wireless network supports accessing all of the servers.

The connecting module 1001 is configured to receive a verification request sent by the device to access the wireless network, in which the verification request includes the identification of the first wireless network, or the identification and the password of the first wireless network. If the first wireless network has no password, a verification response is returned directly, and if the first wireless network has the password, the verification response is returned after a verification on the password is performed. After returning the verification response to the device to access the wireless network, the connecting module 1001 associates the device to access the wireless network with the first wireless network, such that the device to access the wireless network is accessed to the first wireless network.

The connecting module 1001 includes:
a receiving sub-module 1011, configured to receive instructions sent by the part of servers, in which the instruction is used to indicate sending the second access information to the device to access the wireless network; and
a sending sub-module 1012, configured to send the second access information to the device to access the wireless network.

Alternatively, the connecting module 1001 includes:
a receiving sub-module 1011, configured to receive the second access information sent by some of the servers; and
a sending sub-module 1012, configured to send the second access information received by the receiving sub-module 1011 to the device to access the wireless network.

The router further includes: a starting module 1004, configured to turn on the first wireless network.

In an implementation of the present embodiment, the starting module 1004 is configured to: receive a start instruction sent by a mobile terminal, in which the start instruction is used to turn on the first wireless network; and turn on the first wireless network according to the start instruction.

In another implementation of the present embodiment, the first wireless network may also be turned on while the router is started, such that the mobile terminal does not need to send the start instruction.

In the present embodiment, the first wireless network is pre-configured, including a password (which is null or is a set password) and a router filtering (e.g. only data with the part or the some of the servers as a destination address is allowed to pass).

The connecting module 1001 is further configured to establish a second connection with the device to access the wireless network according to the second access information. The connecting module 1001 is configured to: receive a verification request sent by the device to access the wireless network, in which the verification request includes an identification and a password of the second wireless network; return a verification response if the password of the second wireless network passes the verification; receive an association request sent by the device to access the wireless network; and return an association confirmation to the device to access the wireless network. After the association is completed, the device to access the wireless network may perform a data interaction with the router.

In the present embodiments, the router first establishes the connection with the device to access the wireless network via the wireless network only supporting accessing the part or the some of the group of servers, and then sends the device verification information of the device to access the wireless network to the part or some of the servers for the verification, and after the verification is successful, establishes the connection with the device to access the wireless network according to the second access information, such that the device to access the wireless network may access all of the servers and perform data transmission. When the device to access the wireless network connects with the router and accesses all the servers, the user does not need to choose the wireless network and input a password manually, the access process is convenient, and the user experience is improved.

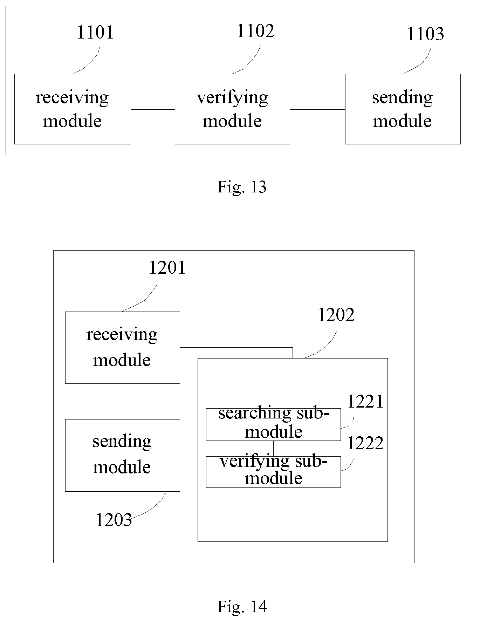

Fig. 13 is a block diagram of a device for accessing a wireless network according to an example embodiment of the present disclosure, and the device may be the server described above. As shown in Fig. 13, the server includes modules a receiving module 1101, a verifying module 1102 and a sending module 1103.

The receiving module 1101 is configured to receive device verification information sent by a device to access the wireless network via a target router.

The verifying module 1102 is configured to perform a verification on the device to access the wireless network according to the device verification information.

The sending module 1103 is configured to send second access information to the device to access the wireless network via the target router when the verification is successful, such that the device to access the wireless network accesses the target router according to the second access information, and thus accesses all of the servers.

In the present embodiment, the server performs the verification on the device to access the wireless network according to the device verification information, and sends the second access information to the device to access the wireless network via the target router when the device to access the wireless network passes the verification, such that the device to access the wireless network is accessed to the target router according to the second access information, accessing all of the servers is supported and data transmission is performed. When the device to access the wireless network accesses the second wireless network, the user does not need to choose the wireless network and input a password manually, the access process is convenient, and the user experience is improved.

Fig. 14 is a block diagram of a device for accessing a wireless network according to another example embodiment of the sixth aspect of the present disclosure, and the device may be the server described above. As shown in Fig. 14, the server includes modules as follows.

The receiving module 1201 is configured to receive device verification information sent by a device to access the wireless network via a target router.

The verifying module 1202 is configured to perform a verification on the device to access the wireless network according to the device verification information, in which the device verification information includes a device identifier and a verification key.

The verification key is generated by the server, and programmed into the device to access the wireless network when producing the device. The verifying module 1202 includes: a searching sub-module 1221, configured to search for the device identification and the verification key sent by the device to access the wireless network in the server; and a verifying sub-module 1222, configured to determine that the verification is successful if the device identification and the matched verification key set by the device to access the wireless network are stored in the server and are matched with each other, to determine that the verification is not successful otherwise.

The sending module 1203 is configured to send second access information to the device to access the wireless network via the target router when the verification is successful, such that the device to access the wireless network accesses the target router according to the second access information, and thus accesses all of the servers.

The second access information includes an identification and a password of a second wireless network, in which, the second wireless network supports accessing all of the servers.

The sending module 1203 is configured to:
send an instruction to the target router so as to instruct the target router to send the second access information to the device to access the wireless network.

Alternatively, the sending module 1203 is configured to:
send the second access information to the target router, such that the second access information is sent to the device to access the wireless network via the target router.

In the present embodiment, the server performs the verification on the device to access the wireless network according to the device verification information, and sends the second access information to the device to access the wireless network via the target router when the device to access the wireless network passes the verification, such that the device to access the wireless network is accessed to the target router according to the second access information, and thus accessing all of the servers is supported and data transmission is performed. When the device to access the wireless network accesses the second wireless network, the user does not need to choose the wireless network and input a password manually, the access process is convenient, and the user experience is improved.

With respect to the devices in the above embodiments, the specific operation modes of individual modules therein have been described in detail in the embodiments regarding the methods, which will not be elaborated herein.

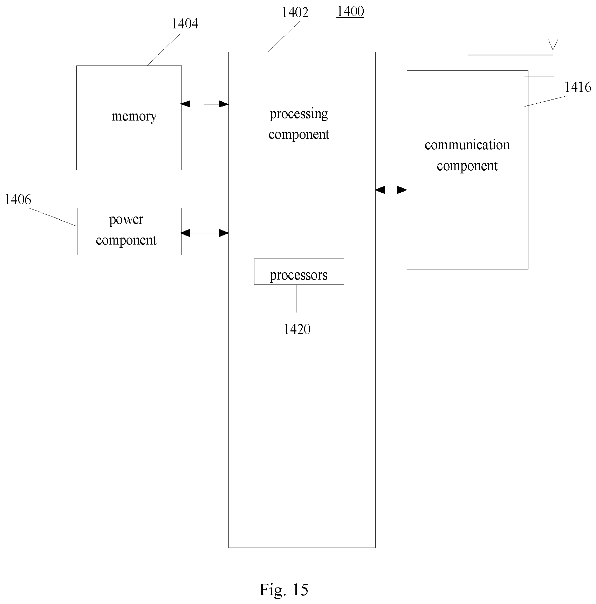

Fig. 15 is a schematic diagram of a device 1400 for accessing a wireless network according to an example embodiment of the present disclosure. For example, the device 1400 may be a smart device.

As shown in Fig. 15, the device 1400 may include the following one or more components: a processing component 1402, a memory 1404, a power component 1406, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The communication component 1416 is configured to facilitate wired or wireless communication between the device 1400 and other devices. The device 1400 can access a wireless network based on a communication standard, such as WIFI, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1404 including instructions. The above instructions are executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

The non-transitory computer readable storage medium having instructions that, when executed by the processor in a device, cause the device to execute a method for accessing a wireless network, and the method includes:
accessing a target router according to first access information, so as to access a part of or some of a group of servers;
sending device verification information to the part of or the some of the servers;
receiving second access information, in which the second access information is sent by the target router when the device verification information passes verification performed on the part or some of the servers; and
accessing the target router according to the second access information, so as to access all of the servers.

In an implementation of the present embodiment, receiving second access information includes:
receiving the second access information sent by the target router, in which the second access information is sent by the target router according to instructions from the part or some of the group of servers.

In another implementation of the present embodiment, receiving second access information includes:
receiving the second access information sent by the part or some of the servers.

In the present embodiment, the second access information may be sent by the part or some of the servers, or may be sent by the router, such that diversified demands are satisfied.

In an implementation of the present disclosure, the device verification information includes a device identification and a verification key.

In an implementation of the present disclosure, the first access information includes an identification of a first wireless network, or the first access information includes the identification and a password of the first wireless network, in which, the first wireless network supports accessing the part or some of the servers.

The second access information includes an identification and a password of a second wireless network, in which, the second wireless network supports accessing all of the servers.

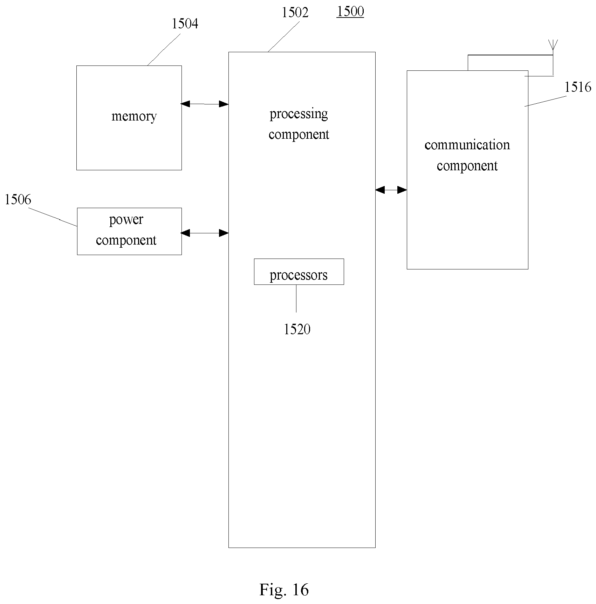

Fig. 16 is a schematic diagram of a device 1500 for accessing a wireless network according to an example embodiment of the eighth aspect of the present disclosure. For example, the device 1500 may be a router.

As shown in Fig. 16, the device 1500 may include the following one or more components: a processing component 1502, a memory 1504, a power component 1506, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The communication component 1516 is configured to facilitate wired or wireless communication between the device 1500 and other devices. The device 1500 can access a wireless network based on a communication standard, such as WIFI, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1504 including instructions. The above instructions are executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having instructions stored therein that, when executed by the processor in a device, cause the device to execute a method for accessing a wireless network, and the method includes:
establishing a first connection with a device to access the wireless network according to first access information, so as to support the device to access some of a group of servers;
receiving device verification information sent by the device;
sending the device verification information to the some of the group of servers; and
after the device verification information passes verification performed on the some of the group of servers, establishing a second connection with the device according to second access information, so as to support the device to access all of the servers of the group of servers.

In an implementation of the present embodiment, establishing a second connection with the device according to second access information includes:
receiving instructions sent by the some of the servers, in which the instructions are used to indicate sending the second access information to the device; and
sending the second access information to the device.

In another implementation of the present embodiment, establishing a second connection with the device according to second access information includes:
receiving the second access information sent by the some of the servers; and
sending the second access information to the device.

In an implementation of the present embodiment, the device verification information includes a device identification and a verification key.

In an implementation of the present embodiment, the first access information includes an identification of a first wireless network, or the first access information includes the identification and a password of the first wireless network, in which, the first wireless network supports accessing the some of the servers.

The second access information includes an identification and a password of a second wireless network, in which, the second wireless network supports accessing all of the servers.

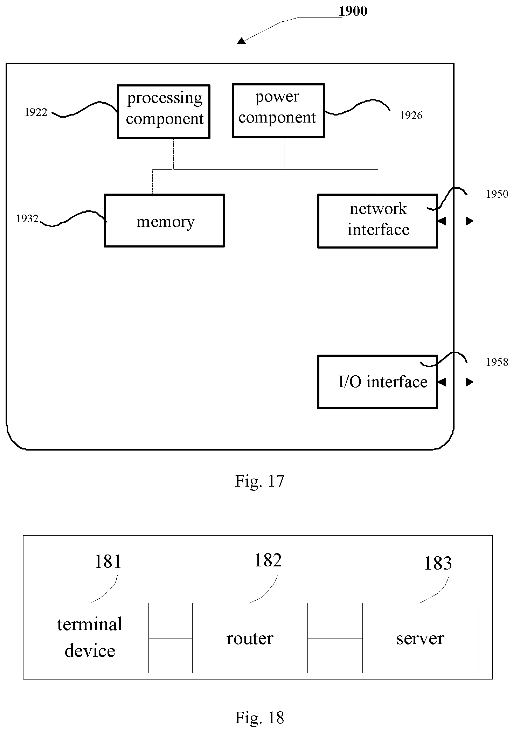

Fig. 17 is a schematic diagram of a device 1900 for accessing a wireless network according to an example embodiment of the ninth aspect of the present disclosure. For example, the device 1900 may be configured as a server. As shown in Fig. 17, the device 1900 includes a processing component 1922, which further includes one or more processors, and memory resource represented by a memory 1932, which is configured to store instructions e.g. application programs executable to the processing component 1922. Application programs stored in the memory 1932 may include one or more modules where each module is corresponding to a set of instructions. Furthermore, the processing component 1922 is configured to execute instructions to perform the method for accessing a wireless network, and the method includes:
receiving device verification information sent by a device to access the wireless network via a target router;
performing a verification on the device according to the device verification information; and
when the verification is successful, sending second access information to the device via the target router, such that the device accesses the target router according to the second access information, and thus accesses all of the servers.

In an implementation of the present embodiment, sending second access information to the device via the target router includes:
sending instructions to the target router so as to instruct the target router to send the second access information to the device.

In another implementation of the present embodiment, sending second access information to the device via the target router includes:
sending the second access information to the target router, such that the second access information is sent to the device via the target router.

In an implementation of the present embodiment, the device verification information includes a device identification and a verification key.

In an implementation of the present embodiment, the second access information includes an identification and a password of a second wireless network, in which, the second wireless network supports accessing all of the servers.

The device 1900 may further include a power component 1926 configured to perform a power management for the device 1900, a wired or wireless network interface 1950 configured to connect the device 1900 to a network, and an input/output (I/O) interface 1958. The device 1900 may operate based on an operating system stored in the memory 1932, e.g. a Windows Server TM, a Mac OS XTM, a Unix TM, a Linux TM, a FreeBSDRM, etc.

Fig. 18 is a block diagram of a system for accessing a wireless network according to an example embodiment of the present disclosure. As shown in Fig. 18, the system includes: a terminal device 181, a router 182 and a server 183. The terminal device 181 is configured to perform the method provided in Fig. 2 or 3, the router 182 is configured to perform the method provided in Fig. 4 or 5, and the server 183 is configured to perform the method provided in Fig. 6 or 7.

The terminal device 181 is configured to access the router according to first access information, so as to access a part of some of the servers; send device verification information to the part or some of the servers; receive second access information; and access the target router according to the second access information, so as to access all of the servers.

In an implementation of the present embodiment, the terminal device 181 is configured to:
receive second access information sent by the router, in which the second access information is sent by the router according to the instruction of the server.

In another implementation of the present embodiment, the terminal device 181 is configured to:
receive the second access information sent by the server.

In the present embodiment, the second access information may be sent by the server, or may be sent by the router, such that diversified demands are satisfied.

In an implementation of the present embodiment, the device verification information includes a device identification and a verification key.

In an implementation of the present embodiment, the first access information includes an identification of a first wireless network, or the first access information includes the identification and a password of the first wireless network, in which, the first wireless network supports accessing the part or some of the servers.

The second access information includes an identification and a password of a second wireless network, in which, the second wireless network supports accessing all of the servers.

The router 182 is configured to establish a first connection with the terminal device according to the first access information; receive the device verification information sent by the terminal device; send the device verification information to the part or some of the servers; and establish a second connection with the terminal device according to the second access information after the device verification information passes verification performed on the part or some of the servers.

In an implementation of the present embodiment, the router 182 is configured to:
receive an instruction sent by the server, in which the instruction is used to indicate sending the second access information to the terminal device; and
send the second access information to the terminal device.

In another implementation of the present embodiment, the router 182 is configured to:
receive the second access information sent by the server; and
send the second access information to the terminal device.

The server 183 is configured to receive the device verification information sent by the terminal device via the router; perform a verification on the terminal device according to the device verification information; and send the second access information to the terminal device via the router when the verification is successful.

In an implementation of the present embodiment, the server 183 is configured to:
send an instruction to the router so as to instruct the router to send the second access information to the terminal device,

In another implementation of the present embodiment, the server 183 is configured to:
send the second access information to the router, such that the second access information is sent to the terminal device via the router.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method performed by a device for accessing a wireless network, comprising:
accessing (S11) a target router according to first access information of a first wireless network, in which, the first wireless network supports accessing less than all of a group of servers, so as to access less than all of the group of servers;
sending (S12) device verification information to the less than all of the group of servers;
receiving (S13) second access information, comprising an identification and a password of a second wireless network, in which, the second wireless network supports accessing all of the servers of the group of servers, wherein the second access information is sent by the target router when the device verification information passes verification performed on the less than all of the group of servers; and
accessing (S14) the target router according to the second access information so as to access all of the servers of the group of servers.

2. The method according to claim 1, wherein, receiving second access information (S13) comprises:
receiving the second access information sent by the target router, in which the second access information is sent by the target router according to an instruction from the less than all of the group of servers.

3. The method according to claim 1, wherein, receiving (S13) second access information comprises:
receiving the second access information sent by the less than all of the group of servers.

4. The method according to any of claims 1-3, wherein, the device verification information comprises a device identification and a verification key.

5. The method according to any of claims 1-3, wherein, the first access information comprises an identification of a first wireless network, or the first access information comprises the identification and a password of the first wireless network.

6. A device for accessing a wireless network, comprising:
an accessing module (701; 801), configured to access a target router according to first access information of a first wireless network, in which, the first wireless network supports accessing less than all of a group of servers, so as to access less than all of the group of servers;
a sending module (702; 802), configured to send device verification information to the less than all of the group of servers; and
a receiving module (703; 803), configured to receive second access information comprising an identification and a password of a second wireless network, in which, the second wireless network supports accessing all of the servers of the group of servers, wherein the second access information is sent by the target router when the device verification information passes verification performed on the less than all of the group of servers;
wherein, the accessing module (701; 801) is further configured to access the target router according to the second access information so as to access all of the servers of the group of servers.

7. The device according to claim 6, wherein the receiving module (703; 803) is configured to:
receive the second access information sent by the target router, in which the second access information is sent by the target router according to instructions from the less than all of the servers of the group of servers.

8. The device according to claim 6, wherein the receiving module (703; 803) is configured to:
receive the second access information sent by the less than all of the servers of the group of servers.

9. The device according to any of claims 6-8, wherein, the device verification information comprises a device identification and a verification key.

10. The device according to any of claims 6-8, wherein, the first access information comprises an identification of a first wireless network, or the first access information comprises the identification and a password of the first wireless network.

11. A system for accessing a wireless network, comprising a terminal device (181), a router (182) and a server of a group of servers (183), wherein,
the terminal device (181) is configured to access the router (182) according to first access information of a first wireless network, in which, the first wireless network supports accessing less than all of a group of servers, so as to access less than all of the group of servers; to send device verification information to the less than all of the group of servers; to receive second access information comprising an identification and a password of a second wireless network, in which, the second wireless network supports accessing all of the servers of the group of servers; and to access the router (182) according to the second access information, so as to access all of the servers of the group of servers;
the router (182) is configured to establish a first connection with the terminal device (181) according to the first access information; to receive the device verification information sent by the terminal device (181); to send the device verification information to the less than all of the group of servers; and to establish a second connection with the terminal device (181) according to the second access information after the device verification information passes verification performed on the less than all of the group of servers; and
the server (183) is configured to receive the device verification information sent by the terminal device (181) via the router (182); to perform a verification on the terminal device (181) according to the device verification information; and to send the second access information to the terminal device (181) via the router (182) when the verification is successful.

12. The system according to claim 11, wherein the server (183) is configured to send an instruction to the router (182), and the router (182) is configured to send the second access information to the terminal device (181) according to the instruction, in which the instruction is used to indicate sending the second access information to the terminal device.

13. The system according to claim 11, wherein the server (183) is configured to send the second access information to the router (182), and the router (182) is configured to forward the second access information sent by the server (183) to the terminal device.

14. The system according to any of claims 11-13, wherein the device verification information comprises a device identification and a verification key.

15. The system according to any of claims 11-13, wherein, the first access information comprises an identification of a first wireless network, or the first access information comprises the identification and a password of the first wireless network.

## Patentansprüche

1. Verfahren, von einer Vorrichtung zum Zugreifen auf ein drahtloses Netzwerk durchgeführt, umfassend:
Zugreifen (S11) auf einen Zielrouter gemäß ersten Zugriffsinformationen eines ersten drahtlosen Netzwerks, bei dem das erste drahtlose Netzwerk das Zugreifen auf weniger als alle von einer Gruppe von Servern unterstützt, um auf weniger als alle der Gruppe von Servern zuzugreifen;
Senden (S12) von Geräteverifizierungsinformationen an die weniger als alle der Gruppe von Servern;
Empfangen (S13) von zweiten Zugriffsinformationen, umfassend eine Kennung und ein Passwort eines zweiten drahtlosen Netzwerks, bei dem das zweite drahtlose Netzwerk das Zugreifen auf alle der Server der Gruppe von Servern unterstützt, wobei die zweiten Zugriffsinformationen vom Zielrouter gesendet werden, wenn die Geräteverifizierungsinformationen die an den weniger als allen der Gruppe von Servern durchgeführte Verifizierung bestehen; und
Zugreifen (S14) auf den Zielrouter gemäß den zweiten Zugriffsinformationen, um auf alle der Server der Gruppe von Servern zuzugreifen.

2. Verfahren nach Anspruch 1, wobei das Empfangen von zweiten Zugriffsinformationen (S13) Folgendes umfasst:
Empfangen der vom Zielrouter gesendeten zweiten Zugriffsinformationen, bei dem die zweiten Zugriffsinformationen von dem Zielrouter gemäß einer Anweisung von den weniger als allen der Gruppe von Servern gesendet werden.

3. Verfahren nach Anspruch 1, wobei das Empfangen (S13) von zweiten Zugriffsinformationen Folgendes umfasst:
Empfangen der von den weniger als allen der Gruppe von Servern gesendeten zweiten Zugriffsinformationen.

4. Verfahren nach einem der Ansprüche 1 bis 3, wobei die Geräteverifizierungsinformationen eine Vorrichtungskennung und einen Verifizierungsschlüssel umfassen.

5. Verfahren nach einem der Ansprüche 1 bis 3, wobei die ersten Zugriffsinformationen eine Kennung eines ersten drahtlosen Netzwerks umfassen oder die ersten Zugriffsinformationen die Kennung und ein Passwort des ersten drahtlosen Netzwerks umfassen.

6. Vorrichtung zum Zugreifen auf ein drahtloses Netzwerk, umfassend:
ein Zugriffsmodul (701; 801), das konfiguriert ist zum Zugreifen auf einen Zielrouter gemäß ersten Zugriffsinformationen eines ersten drahtlosen Netzwerks, bei dem das erste drahtlose Netzwerk das Zugreifen auf weniger als alle von einer Gruppe von Servern unterstützt, um auf weniger als alle der Gruppe von Servern zuzugreifen;
ein Sendemodul (702; 802), das konfiguriert ist zum Senden von Geräteverifizierungsinformationen an die weniger als alle der Gruppe von Servern; und
ein Empfangsmodul (703; 803), das konfiguriert ist zum Empfangen von zweiten Zugriffsinformationen, umfassend eine Kennung und ein Passwort eines zweiten drahtlosen Netzwerks, bei dem das zweite drahtlose Netzwerk das Zugreifen auf alle der Server der Gruppe von Servern unterstützt, wobei die zweiten Zugriffsinformationen vom Zielrouter gesendet werden, wenn die Geräteverifizierungsinformationen die an den weniger als allen der Gruppe von Servern durchgeführte Verifizierung bestehen;
wobei das Zugriffsmodul (701; 801) ferner konfiguriert ist zum Zugreifen auf den Zielrouter gemäß den zweiten Zugriffsinformationen, um auf alle der Server der Gruppe von Servern zuzugreifen.

7. Vorrichtung nach Anspruch 6, wobei das Empfangsmodul (703; 803) konfiguriert ist zum:
Empfangen der vom Zielrouter gesendeten zweiten Zugriffsinformationen, bei dem die zweiten Zugriffsinformationen von dem Zielrouter gemäß Anweisungen von den weniger als allen der Server der Gruppe von Servern gesendet werden.

8. Vorrichtung nach Anspruch 6, wobei das Empfangsmodul (703; 803) konfiguriert ist zum:
Empfangen der von den weniger als allen der Server der Gruppe von Servern gesendeten zweiten Zugriffsinformationen.

9. Vorrichtung nach einem der Ansprüche 6 bis 8, wobei die Geräteverifizierungsinformationen eine Vorrichtungskennung und einen Verifizierungsschlüssel umfassen.

10. Vorrichtung nach einem der Ansprüche 6 bis 8, wobei die ersten Zugriffsinformationen eine Kennung eines ersten drahtlosen Netzwerks umfassen oder die ersten Zugriffsinformationen die Kennung und ein Passwort des ersten drahtlosen Netzwerks umfassen.

11. System zum Zugreifen auf ein drahtloses Netzwerk, umfassend ein Endgerät (181), einen Router (182) und einen Server einer Gruppe von Servern (183), wobei
das Endgerät (181) konfiguriert ist zum Zugreifen auf den Router (182) gemäß ersten Zugriffsinformationen eines ersten drahtlosen Netzwerks, bei dem das erste drahtlose Netzwerk das Zugreifen auf weniger als alle von einer Gruppe von Servern unterstützt, um auf weniger als alle der Gruppe von Servern zuzugreifen; zum Senden von Geräteverifizierungsinformationen an die weniger als alle der Gruppe von Servern; zum Empfangen von zweiten Zugriffsinformationen, umfassend eine Kennung und ein Passwort eines zweiten drahtlosen Netzwerks, bei dem das zweite drahtlose Netzwerk das Zugreifen auf alle der Server der Gruppe von Servern unterstützt; und zum Zugreifen auf den Router (182) gemäß den zweiten Zugriffsinformationen, um auf alle der Server der Gruppe von Servern zuzugreifen;
der Router (182) konfiguriert ist zum Herstellen einer ersten Verbindung mit dem Endgerät (181) gemäß den ersten Zugriffsinformationen; zum Empfangen der vom Endgerät (181) gesendeten Geräteverifizierungsinformationen; zum Senden der Geräteverifizierungsinformationen an die weniger als alle der Gruppe von Servern; und zum Herstellen einer zweiten Verbindung mit dem Endgerät (181) gemäß den zweiten Zugriffsinformationen, nachdem die Geräteverifizierungsinformationen eine an den weniger als allen der Gruppe von Servern durchgeführte Verifizierung bestanden haben; und
der Server (182) konfiguriert ist zum Empfangen der vom Endgerät (181) über den Router (182) gesendeten Geräteverifizierungsinformationen; zum Durchführen einer Verifizierung am Endgerät (181) gemäß den Geräteverifizierungsinformationen und zum Senden der zweiten Zugriffsinformationen über den Router (182) an das Endgerät (181), wenn die Verifizierung erfolgreich war.

12. System nach Anspruch 11, wobei der Server (183) konfiguriert ist zum Senden einer Anweisung an den Router (182) und der Router (182) konfiguriert ist zum Senden der zweiten Zugriffsinformationen an das Endgerät (181) gemäß der Anweisung, bei dem die Anweisung zum Anzeigen des Sendens der zweiten Zugriffsinformationen an das Endgerät verwendet wird.

13. System nach Anspruch 11, wobei der Server (183) konfiguriert ist zum Senden der zweiten Zugriffsinformationen an den Router (182) und der Router (182) konfiguriert ist zum Weiterleiten der vom Server (183) gesendeten zweiten Zugriffsinformationen an das Endgerät.

14. System nach einem der Ansprüche 11 bis 13, wobei die Geräteverifizierungsinformationen eine Gerätekennung und einen Verifizierungsschlüssel umfassen.

15. System nach einem der Ansprüche 11 bis 13, wobei die ersten Zugriffsinformationen eine Kennung eines ersten drahtlosen Netzwerks umfassen oder die ersten Zugriffsinformationen die Kennung und ein Passwort des ersten drahtlosen Netzwerks umfassen.

## Revendications

1. Procédé exécuté par un dispositif pour accéder à un réseau sans fil, comprenant :
l'accès (S11) à un routeur cible conformément à des premières informations d'accès d'un premier réseau sans fil, dans lequel le premier réseau sans fil prend en charge l'accès à un nombre moindre que la totalité d'un groupe de serveurs, de manière à accéder à moins de la totalité du groupe de serveurs ;
l'envoi (S12) d'informations de vérification de dispositif au nombre moindre que la totalité du groupe de serveurs ;
la réception (S13) de secondes informations d'accès, comprenant une identification et un mot de passe d'un second réseau sans fil, dans lequel le second réseau sans fil prend en charge l'accès à la totalité des serveurs du groupe de serveurs, dans lequel les secondes informations d'accès sont envoyées par le routeur cible quand les informations de vérification de dispositif réussissent une vérification exécutée sur le nombre moindre que la totalité du groupe de serveurs ; et
l'accès (S14) au routeur cible conformément aux secondes informations d'accès de manière à accéder à la totalité des serveurs du groupe de serveurs.

2. Procédé selon la revendication 1, dans lequel la réception de secondes informations d'accès (S13) comprend :
la réception des secondes informations d'accès envoyées par le routeur cible, dans lequel les secondes informations d'accès sont envoyées par le routeur cible conformément à l'instruction provenant du nombre moindre que la totalité du groupe de serveurs.

3. Procédé selon la revendication 1, dans lequel la réception (S13) de secondes informations d'accès comprend :
la réception des secondes informations d'accès envoyées par le nombre moindre que la totalité du groupe de serveurs.

4. Procédé selon l'une quelconque des revendications 1 à 3, dans lequel les informations de vérification de dispositif comprennent une identification de dispositif et une clé de vérification.

5. Procédé selon l'une quelconque des revendications 1 à 3, dans lequel les premières informations d'accès comprennent une identification d'un premier réseau sans fil, ou les premières informations d'accès comprennent l'identification et un mot de passe du premier réseau sans fil.

6. Dispositif pour accéder à un réseau sans fil, comprenant :
un module d'accès (701 ; 801), configuré pour accéder à un routeur cible conformément à des premières informations d'accès d'un premier réseau sans fil, dans lequel le premier réseau sans fil prend en charge l'accès à un nombre moindre que la totalité d'un groupe de serveurs, de manière à accéder à moins de la totalité du groupe de serveurs ;
un module d'envoi (702 ; 802) configuré pour envoyer des informations de vérification de dispositif au nombre moindre que la totalité du groupe de serveurs ; et
un module de réception (703 ; 803), configuré pour recevoir des secondes informations d'accès, comprenant une identification et un mot de passe d'un second réseau sans fil, dans lequel le second réseau sans fil prend en charge l'accès à la totalité des serveurs du groupe de serveurs, dans lequel les secondes informations d'accès sont envoyées par le routeur cible quand les informations de vérification de dispositif réussissent une vérification exécutée sur le nombre moindre que la totalité du groupe de serveurs ;
dans lequel le module d'accès (701 ; 801) est configuré en outre pour accéder au routeur cible conformément aux secondes informations d'accès de manière à accéder à la totalité des serveurs du groupe de serveurs.

7. Dispositif selon la revendication 6, dans lequel le module de réception (703 ; 803) est configuré en outre pour :
recevoir les secondes informations d'accès envoyées par le routeur cible, dans lequel les secondes informations d'accès sont envoyées par le routeur cible conformément à des instructions envoyées par le nombre moindre que la totalité du groupe de serveurs.

8. Dispositif selon la revendication 6 dans lequel le module de réception (703 ; 803) est configuré en outre pour :
recevoir les secondes informations d'accès envoyées par le nombre moindre que la totalité du groupe de serveurs.

9. Dispositif selon l'une quelconque des revendications 6 à 8, dans lequel les informations de vérification de dispositif comprennent une identification de dispositif et une clé de vérification.

10. Dispositif selon l'une quelconque des revendications 6 à 8, dans lequel les premières informations d'accès comprennent une identification d'un premier réseau sans fil, ou les premières informations d'accès comprennent l'identification et un mot de passe du premier réseau sans fil.

11. Système d'accès à un réseau sans fil, comprenant un dispositif périphérique (181), un routeur (182) et un serveur d'un groupe de serveurs (183), dans lequel,
le dispositif périphérique (181) est configuré pour accéder au routeur (182) conformément à des premières informations d'accès d'un premier réseau sans fil, le premier réseau sans fil prenant en charge l'accès à un nombre moindre que la totalité d'un groupe de serveurs, de manière à accéder à moins de la totalité du groupe de serveurs ; envoyer des informations de vérification de dispositif au nombre moindre que la totalité du groupe de serveurs ; recevoir des secondes informations d'accès comprenant une identification et un mot de passe d'un second réseau sans fil, le second réseau sans fil prenant en charge l'accès à la totalité des serveurs du groupe de serveurs ; et accéder au routeur (182) conformément aux secondes informations d'accès, de manière à accéder à la totalité des serveurs du groupe de serveurs ;
le routeur (182) est configuré pour établir une première connexion avec le dispositif périphérique (181) conformément aux premières informations d'accès ; recevoir les informations de vérification de dispositif envoyées par le dispositif périphérique (181) ; envoyer les informations de vérification de dispositif au nombre moindre que la totalité du groupe de serveurs ; et établir une seconde connexion avec le dispositif périphérique (181) conformément aux secondes informations d'accès après que les informations de vérification de dispositif réussissent une vérification exécutée sur le nombre moindre que la totalité du groupe de serveurs ; et
le serveur (183) est configuré pour recevoir les informations de vérification de dispositif envoyées par le dispositif périphérique (181) par l'intermédiaire du routeur (182) ; exécuter une vérification sur le dispositif périphérique (181) conformément aux informations de vérification de dispositif ; et envoyer les secondes informations d'accès au dispositif final (181) par l'intermédiaire du routeur (182) quand la vérification réussit.

12. Système selon la revendication 11, dans lequel le serveur (183) est configuré pour envoyer une instruction au routeur (182), et le routeur (182) est configuré pour envoyer les secondes informations d'accès au dispositif périphérique (181) conformément à l'instruction, dans lequel l'instruction est utilisée pour indiquer l'envoi des secondes informations d'accès au dispositif périphérique.

13. Système selon la revendication 11, dans lequel le serveur (183) est configuré pour envoyer les secondes informations d'accès au routeur (182), et le routeur (182) est configuré pour transférer les secondes informations d'accès envoyées par le serveur (183) au dispositif périphérique.

14. Dispositif selon l'une quelconque des revendications 11 à 13, dans lequel les informations de vérification de dispositif comprennent une identification de dispositif et une clé de vérification.

15. Dispositif selon l'une quelconque des revendications 11 à 13, dans lequel les premières informations d'accès comprennent une identification d'un premier réseau sans fil, ou les premières informations d'accès comprennent l'identification et un mot de passe du premier réseau sans fil.
